Europäisches Patentamt

European Patent Office

Office européen des brevets

(19)

(11) Veröffentlichungsnummer : **0 423 145 B1**

(12) ## EUROPÄISCHE PATENTSCHRIFT

(45) Veröffentlichungstag der Patentschrift :
02.12.92 Patentblatt 92/49

(51) Int. Cl.⁵ : **B65G 67/60**

(21) Anmeldenummer : **89906081.8**

(22) Anmeldetag : **03.06.89**

(86) Internationale Anmeldenummer :
**PCT/EP89/00624**

(87) Internationale Veröffentlichungsnummer :
**WO 90/00510 25.01.90 Gazette 90/03**

(54) WENDELFÖRDERER ZUM BE- UND ENTLADEN VON STÜCKGUT.

(30) Priorität : **05.07.88 DE 3822629**

(43) Veröffentlichungstag der Anmeldung :
**24.04.91 Patentblatt 91/17**

(45) Bekanntmachung des Hinweises auf die
Patenterteilung :
**02.12.92 Patentblatt 92/49**

(84) Benannte Vertragsstaaten :
**AT BE CH DE FR GB IT LI LU NL SE**

(56) Entgegenhaltungen :
**DE-A- 3 019 985
DE-C- 3 720 093
GB-A- 2 147 869
US-A- 4 269 302**

(73) Patentinhaber : **O & K ORENSTEIN & KOPPEL AG
Brunsbütteler Damm 144-208
W-1000 Berlin 20 (DE)**

(72) Erfinder : **STECKEL, Horst
Rosenstr. 5
W-6670 St. Ingbert (DE)**
Erfinder : **STENGER, Erich
Am Kellerberg 6
W-6683 Spiesen-Elversberg (DE)**

**Beschreibung**

Die Erfindung betrifft einen Wendelförderer zum Be- und Entladen von Stückgut in und aus Laderäumen, insbesondere zum Be- und Entladen von Schiffen, bestehend aus einem im wesentlichen vertikal angeordneten Senkrechtförderer, der in seinem oberen Endbereich mit einem Ausleger verbunden ist, wobei der Senkrechtförderer mit mehreren wendelförmigen übereinander angeordneten Förderelementen ausgestattet ist, die mittels eines umlaufenden Kettenstranges antreibbar sind und wobei in vorgegebenen Abständen mit dem Kettenstrang zusammenwirkende Horzontal- und Vertikalrollen vorgesehen sind, die entsprechend der Wendelsteigung in ebenfalls wendelförmig angeordneten Führungen laufen und wobei auf den Rollen quer zum Kettenstrang in vorgegebenen Abständen Traversen befestigt sind.

Durch die DE-B 12 90 875 ist eine Vorrichtung zum Be- und Entladen, insbesondere von Schiffen mit Stück- und/oder Schüttgut bekannt. Oberhalb eines in einem starren Trägergestell gehaltenen wendelförmigen Förderers ist ein zweiter wendelförmiger Förderer in einem innerhalb des Trägerrohres geführten und um seine Längsachse drehbaren Haltegestell angeordnet. Das Haltegestell ist an seiner Außenwandung mit schraubengewindeförmigen Profilierungen versehen, die mit an der Innenwandung des Trägergestells ausgebildeten Gegenprofilen im Eingriff stehen. Die beiden Profilierungen sind der Steigung der Wendel entsprechend ausgebildet. An dem unteren freien Ende des Wendelförderers ist ein Horizontalförderer (Tisch) befestigt, so daß ein Verschwenken des Horizontalförderers über 360° möglich ist, was durch Verschrauben der unteren Wendel in die nächst höhere Wendel erreicht wird. Als Förderelemente kommen bei diesem Anwendungsfall Förderbänder zum Einsatz, die entsprechend der Wendelform des Senkrechtförderers gestaltet sind. Nachteilig bei dieser Konstruktion ist zu bemerken, daß es verhältnismäßig problembehaftet ist, einerseits derart vorgeformte Förderbänder zu beziehen und andererseits diese entsprechend vorzuspannen, damit die Antriebskraft von den Umlenktrommeln auf die Förderbänder durch Mitnahme gewährleistet werden kann. Ferner nachteilig erscheint der verhältnismäßig komplizierte Aufbau, der zur Umlenkung der Förderbänder im wendelförmigen Bereich betrieben werden muß.

Der DE-A 30 19 985 ist ein Wendelförderer zum Transport von Stückgut, insbesondere zum Be- und Entladen von Sackgut oder dgl. aus Schiffen, zu entnehmen, der einen endlosen, im wesentlichen senkrechten Kettenförderer bzw. spiralig ausgebildeten Kettenstrang zur Förderung des Gutes beinhaltet. Im Gesamtbereich des Kettenstranges bzw. seines oberen sowie unteren Abschnittes sind auf dem Kettenstrang quer und mittig Traglamellen relativ dicht nebeneinander angeordnet, die in der Draufsicht gesehen, beidseitig trapezförmig ausgebildet sind, wodurch die Traglamellen im Bogenbereich eine im wesentlichen geschlossene Förderbahn gewährleisten. Der Wendelförderer ist an einer Schienenbahn mittels Rollen geführt, wobei die Schienen rohrförmig ausgebildet sind und die Endpunkte eines gedachten Quadrates bilden. Die Rollen sind jeweils paarweise auf einer Achse angeordnet und werden zwischen jeweils einem vertikal bzw. horizontal beabstandeten Schienenpaar geführt. Da das Gut bei der Vertikalförderung nicht immer in der Mitte der Traglamellen liegt und in der Regel infolge von Fliehkrafteinflüssen radial nach außen geleitet wird, findet bei dieser Ausführungsform eine starke einseitige Verkantung der Traglamellen statt, die sich bis in die Rollenführung fortsetzt und hier zu einem verhältnismäßig schnellen Verschleiß der Rollen führt. Infolge dieses Verschleißes muß die Anlage größer dimensioniert werden, womit wiederum höhere Fertigungskosten verbunden sind.

Der Erfindung liegt die Aufgabe zugrunde, einen im gattungsbildenden Teil des ersten Patentanspruches beschriebenen Wendelförderer dahingehend weiterzubilden, daß er einerseits einfacher im Aufbau und somit in der Fertigung und Wartung wird und andererseits so ausgestaltet wird, daß bei hoher Durchsatzleistung verhältnismäßig steil gefahren werden kann.

Diese Aufgabe wird erfindungsgemäß dadurch gelöst, daß die Quertraversen beidseitig gegen Kippen auf vertikal angeordneten Führungsleisten abgestützt und gegen horizontales Verdrehen an den aus Rundgliedern bestehenden Bauteilen des Kettenstranges gehalten sind, daß der Antrieb des Kettenstranges am oberen Ende des Senkrechtförderers angeordnet ist, und daß die Führung des Kettenstranges sowohl im Ober- als auch im Untertrum durch die Rollen in Verbindung mit je einer wendelförmig ausgebildeten Führung erfolgt.

Die gegenüber dem Stand der Technik erzielbaren Vorteile stellen sich wie folgt dar:
- Es wird eine Rundgliederkette verwendet, die sich ohne Schwierigkeiten der Wendelform anpassen kann.
- Die Rundgliederkette trägt und zieht die Last nach oben und unten.
- Es kann extrem steil gefahren werden, wodurch die Förderlänge abgekürzt wird.
- Wird lediglich der Senkrechtförderer ohne weitere untere Anbauteile verwendet, kann die Antriebsleistung durch lediglich einen Antrieb aufgebracht werden.
- Mit der Rundgliederkette können, im Gegensatz zum Band, hohe Geschwindigkeiten von bis zu 1,6 m/s gefahren werden. Infolge der vorgeschlagenen konstruktiven Ausgestaltung kann entweder die Nutzlast stark reduziert oder aber die Förderleistung drastisch erhöht werden.

- Der Wendelförderer ist kundenfreundlich, da wenig Verschleißteile vorhanden sind, die kaum zu warten sind.

- Der Wendelförderer weist eine hohe Betriebssicherheit auf und ist unempfindlich gegen Seitenstöße bei Havarie und Verformungen.

Vorteilhafte Weiterbildungen des Erfindungsgegenstandes sind den Unteransprüchen zu entnehmen. Der vorgeschlagene Wendelkettenförderer ist für Stückgut in Form von Kisten und Säcken zur Auf- und Abwärtsförderung (Be- und Entladung von Schiffen, Güterwaggons, Containern, LKW sowie Transport von Gütern in Gebäuden auf verschiedenen Etagen) einsetzbar. Der Antrieb des Senkrechtförderers erfolgt an seinem oberen Ende über einen auf die Welle aufgezogenen Kettenstern, der mit einem Elektro-, Hydraulik- oder Pneumatik-Antrieb ausgerüstet werden kann. An seinem unteren Ende befindet sich der Umkehr-Kettenstern.

Analog zum Stand der Technik besteht auch hier die Möglichkeit, den Senkrechtförderer mit einem Horizontalförderer zu kombinieren, um im Bereich des Laderaumes jede Stellung, über 360° gesehen, erreichen zu können. Als Alternativen bieten sich hier teleskopierbare Förderbänder sowie teleskopierbare Kettenförderer an. Der Horizontalförderer wird mittels Hydraulikzylindern gehoben und abgesenkt. Diese Einheit ist an dem drehbaren Wendelförderer gelenkig gelagert. Der drehbare Teil dreht sich auf dem festen Teil des Wendelförderers auf und ab und wird in einem der Wendel angepaßten Gewindegang (Flachstahlspirale) geführt. Mittels des angesprochenen Hydraulikzylinders, dessen Hub- in Drehbewegung umgesetzt werden kann, wird der Horizontalförderer um 360° geschwenkt. Der feste Teil des Wendelförderers hängt an einem heb- und senkbaren Ausleger mit eingebautem Förderband. Dieser dient zum Anfahren der unterschiedlichen Höhen und hält automatisch die Höhenlage bei den Drehbewegungen konstant. Ferner ist zwischen dem Ausleger und dem festen Teil des Wendelförderers ein horizontal sich erstreckender Hydraulikzylinder angeordnet, der zur automatischen Senkrechthaltung des Senkrechtförderers dient.

Der Wendelförderer besteht im drehbaren und festen Teil aus einer Rundgliederkette, mit in bestimmten Abständen angeordneten Horizontal- und Vertikalrollen, die in einer wendelförmigen Führung laufen und an den Enden über ein Kettenrad umgelenkt werden. Auf den Führungsrollen werden Quertraversen angebracht, die sich rechts und links gegen Kippen auf Führungsleisten abstützen und gegen horizontales Verdrehen an den Kettengliedern gehalten werden. Um verhältnismäßig geräuschlos fahren sowie den Verschleiß klein halten zu können, werden an den Traversenenden Kunststoffklötzchen angebracht. Auf den Quertraversen können schmale Gummigurte oder speziell geformte Lamellen aufgeschraubt werden, worauf die Säcke oder Kartons abgesetzt werden. Die Stückgutübergabe von dem drehenden in den festen Teil des Wendelförderers läuft über eine im wesentlichen horizontal angeordnete Zunge. Die Zunge ist am drehbaren Teil des Wendelförderers gelenkig gelagert und gleitet an ihrem freien Ende ebenfalls auf Kunststoffklötzchen. Auf der Zunge selbst sind angetriebene, konische Rollen eingebaut, um ein mögliches Stehebleiben des Stückgutes zu verhindern.

Der Wendelförderer wird auf der gesamten Höhe mit einer durchsichtigen Plane gegen Regen und Wind geschützt. Eine Begehung des Wendelförderers für ggf. notwendige Wartungs- oder Reparatureinsätze ist gegeben durch eine um die Hauptsäule wendelförmig angeordnete Treppe bzw. einen Laufsteg.

Die Erfindung ist anhand eines Ausführungsbeispieles in der Zeichnung dargestellt und wird wie folgt beschrieben.

Es zeigen:

Figur 1 senkrechten Schnitt durch den Wendelförderer,

Figur 2 Teilansicht des Führungsbereiches der Kette,

Figuren 3 und 4 Übergabebereich vom drehenden in den festen Teil des Wendelförderers.

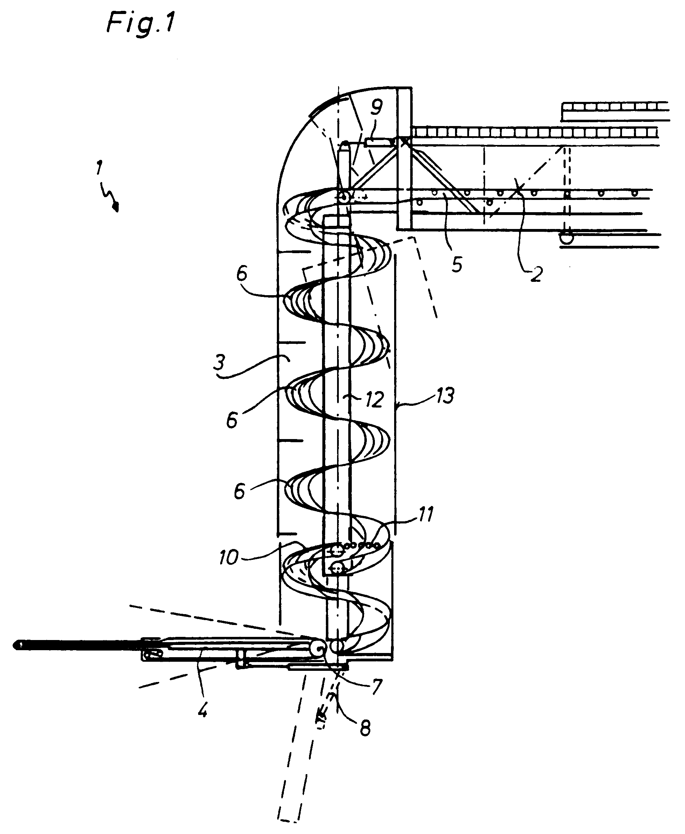

Fig. 1 zeigt einen Wendelförderer 1, der aus folgenden Komponenten zusammengesetzt ist: Einen im wesentlichen horizontal sich erstreckenden Ausleger 2, einen Senkrechtförderer 3 sowie einen Horizontalförderer 4. Der Ausleger 2 ist an einem nicht weiter dargestellten ggf. verfahrbaren Portal befestigt und ist mit einem Förderband 5 versehen. Der Senkrechtförderer besteht aus mehreren übereinander angeordneten Wendeln 6. Am unteren Ende des Senkrechtförderers ist ein um eine horizontale Achse 7 schwenkbarer teleskopierbarer Horizontalförderer 4 angeordnet, der in Form eines Förderbandes ausgebildet ist. Die Schwenkbewegung des Horizontalförderers 4 erfolgt über einen am unteren Ende des Senkrechtförderers 3 verlagerten Hydraulikzylinder 8. Am oberen Bereich des Senkrechtförderers 3 erstreckt sich ein weiterer Hydraulikzylinder 9, der mit dem Ausleger 2 verbunden ist und der bei Auf- und Abwärtsbewegungen des Auslegers ein absolut vertikales Verfahren des Senkrechtförderers 3 gewährleistet. Der Horizontalförderer 4 kann um 360° gegenüber dem Senkrechtförderer 3 verdreht werden, wobei er mittels eines nicht weiter dargestellten Hubzylinders schraubenförmig in die 1. Wendel 6 des Senkrechtförderers hineingebracht wird. Der Übergabebereich zwischen dem drehenden Teil 10 und dem feststehenden Teil 6 des Senkrechtförderers 3 wird durch eine Übergabezunge 11 gebildet. Die Wendeln 6 winden sich zwischen einer inneren Zentralsäule 12 sowie einem äußeren Gehäuseteil 13, der ggf. mit einer Außenverkleidung versehen werden kann.

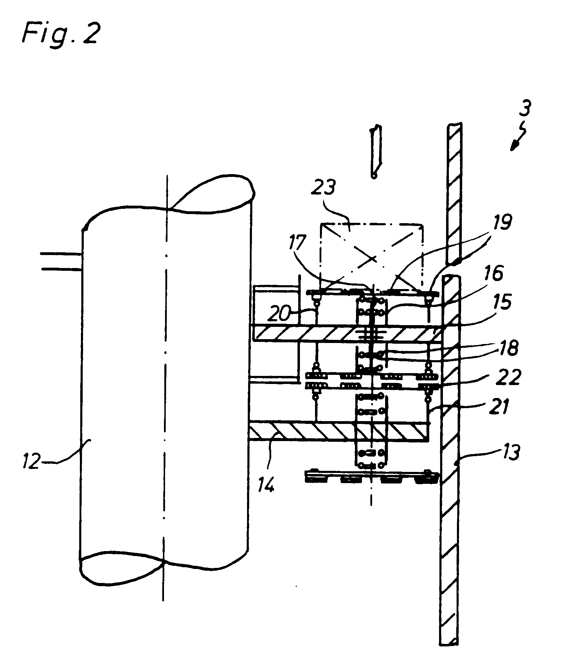

Fig. 2 zeigt eine Teilansicht der Fig. 1 und zwar den Führungsbereich der Ketten. Dargestellt ist die mittlere Zentralsäule 12 sowie der Gehäuseteil 13. In vorgegebenen Abständen erstrecken sich alternierend zwischen der Zentralsäule und dem Gehäuse horizontal verlaufende Stege 14,15. An den Stegen 14,15 sind schienenförmige Führungen 16 ebenfalls wendelförmig angeordnet. Das Zugelement 17 ist als Rundgliederkette ausgebildet und wird jeweils im oberen sowie unteren Bereich des Senkrechtförderers 3 (nicht weiter dargestellt) umgelenkt. In vorgegebenen Abständen wirken mit der Kette 17 Horizontal- und Vertikalrollen 18 zusammen, die in den schienenförmigen Führungen 16 laufen. Auf den Führungsrollen 18 sind in vorgegebenen Abständen quer zur Kettenebene angeordnete Traversen 19 vorgesehen. Zur Vermeidung des Kippens der Traversen 19 sind mit den Stegen 14,15 verbundene, im wesentlichen vertikal angeordnete Führungsleisten 20,21 befestigt. Um einen relativ geräuschlosen Lauf der Traversen 19 auf den Führungselementen 20,21 herbeizuführen, sind unterhalb der Traversen 19 im Bereich der Führungselemente 20,21 Kunststoffklötzchen 22 vorgesehen. Die zu transportierenden Gegenstände 23 (nur angedeutet) liegen auf den Traversen 19 bzw. mit diesen zusammenwirkenden Gurtbändern oder Fördersegmenten auf (nicht dargestellt).

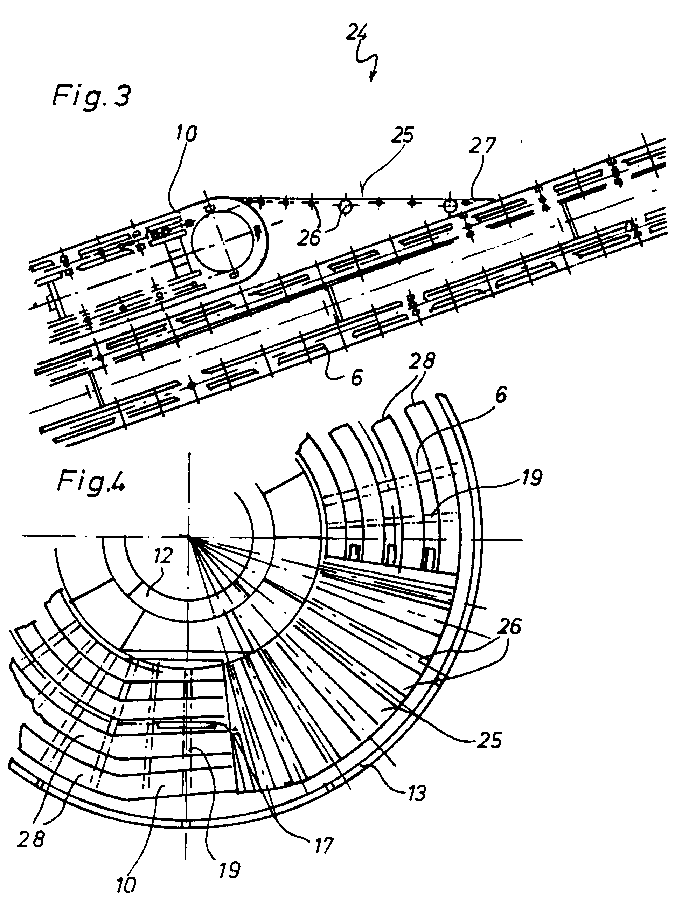

Die Figuren 3 und 4 zeigen in verschiedenen Ansichten den Übergangsbereich 24 vom drehenden Teil 10 in den feststehenden Teil 6. In Fig. 4 erkennbar sind die innere Zentralträgersäule 12, der äußere Gehäuseteil 13, die Traversen 19, die Kette 17 sowie eine als Übergabeeinrichtung dienende Zunge 25, die aus mehreren konisch ausgestalteten sowie angetriebenen Rollen 26 gebildet ist. Die Zunge 25 erstreckt sich vom drehenden Teil 10 in Richtung des feststehenden Teiles 6 im wesentlichen horizontal. Sie ist im Bereich des drehenden Teiles 10 gelenkig gelagert und gleitet im freien Bereich 27 auf nicht weiter dargestellten Kunststoffklötzchen. In diesem Beispiel erstrecken sich zwischen den Traversen Gurtbänder 28. Alternativ besteht natürlich auch die Möglichkeit, anstelle der Gurtbänder kreissegmentförmig ausgebildete Lamellen mit ggf. gewölbter Oberfläche zum Einsatz zu bringen.

**Patentansprüche**

1. Wendelförderer zum Be- und Entladen von Stückgut in und aus Laderäumen, insbesondere zum Be- und Entladen von Schiffen, bestehend aus einem im wesentlichen vertikal angeordneten Senkrechtförderer (3), der in seinem oberen Endbereich mit einem Ausleger (2) verbunden ist, wobei der Senkrechtförderer (3) mit mehreren wendelförmig übereinander angeordneten Förderelementen ausgestattet ist, die mittels eines umlaufenden Kettenstranges (17) antreibbar sind und wobei in vorgegebenen Abständen mit dem Kettenstrang (17) zusammenwirkende Horizontal- und Vertikalrollen (18) vorgesehen sind, die entsprechend der Wendelsteigung in ebenfalls wendelförmig angeordneten Führungen (16) laufen und wobei auf den Rollen (18) quer zum Kettenstrang (17) in vorgegebenen Abständen Traversen (19) befestigt sind, dadurch gekennzeichnet, daß die quertraversen (19) beidseitig gegen Kippen auf vertikal angeordneten Führungsleisten (20,21) abgestützt und gegen horizontales Verdrehen an den aus Rundgliedern bestehenden Bauteilen des Kettenstranges (17) gehalten sind, daß der Antrieb des Kettenstranges (17) am oberen Ende des Senkrechtförderers (3) angeordnet ist, und daß die Führung des Kettenstranges (17) sowohl im Ober- als auch im Untertrum durch die Rollen (18) in Verbindung mit je einer wendelförmig ausgebildeten Führung (16) erfolgt.

2. Wendelförderer nach Anspruch 1, dadurch gekennzeichnet, daß im Berührungsbereich Traverse (19) / Führungsleisten (20,21) Kunststoffelemente (22) an den Traversen (19) befestigt sind.

3. Wendelförderer nach den Ansprüchen 1 und 2, dadurch gekennzeichnet, daß zwischen den einzelnen Traversen (19) Gurtbänder gespannt sind.

4. Wendelförderer mit einem Horizontalförderer, der über einen in den unteren Bereich des Senkrechtförderers (3) gewindeartig hineindrehbaren Haltekörper gegenüber dem Senkrechtförderer verdrehbar ist, nach den Ansprüchen 1-3, dadurch gekennzeichnet, daß der Haltekörper mittels eines vertikal angeordneten, Hub- in Drehbewegung umsetzenden Zylinders, relativ zum Senkrechtförderer (3) bewegbar ist, wobei die Übergabe der Gegenstände (23) von dem drehenden (10) in den festen Teil (6) des Senkrechtförderers (3) über eine horizontal angeordnete Zunge (25) erfolgt.

5. Wendelförderer nach Anspruch 4, dadurch gekennzeichnet, daß die Zunge (25) am drehenden Teil (10) gelenkig gelagert ist und am freien Ende (27) auf dem festen Teil (6) des Senkrechtförderers (3) auf Kunststoffelementen gleitet.

6. Wendelförderer nach den Ansprüchen 4 und 5, dadurch gekennzeichnet, daß auf der Zunge (25) antreibbare konische Rollen (26) vorgesehen sind.

7. Wendelförderer nach den Ansprüchen 4-6, dadurch gekennzeichnet, daß zum Ausgleich von Höhenunterschieden im Verlauf der Relativbewegung des drehenden (10) gegenüber dem festen (6) Teil des Senkrechtförderers (3) der Ausleger (2) automatisch nachführbar ist, wobei im oberen Bereich des Senkrechtförderers (3) ein etwa horizontal sich erstreckender, mit dem Ausleger (2) verbundener Zylinder (9) zum Ausgleich von Neigungen bei der Aufwärtsbewegung des Auslegers (2) vorgesehen ist.

## Claims

1. Helical conveyor for loading and unloading unit packages in and out of holds, especially for loading and unloading ships, consisting of a substantially vertically arranged vertical conveyor (3), which is connected in its upper end region to a boom (2), the vertical conveyor (3) being equipped with a plurality of conveyor elements which are arranged in a helical shape one above the other and are arranged to be driven by means of a revolving chain run (17), and wherein horizontal and vertical rollers (18) cooperating at predetermined intervals with thy chain run (17) are provided which run, corresponding to the pitch of the helix, in guides (16) which are likewise arranged in a helical shape, and wherein cross-members (19) are secured at predetermined intervals on the rollers (18) transversely to the chain run (17), characterised in that the cross-members (19) are supported on both sides against tilting on vertically arranged guide bars (20,21) and secured against horizontal rotation on the components, consisting of round links, of the chain run (17), that the drive of the chain run (17) is arranged at the upper end of the vertical conveyor (3), and that the chain run (17) is guided both in the upper and in the lower portion by means of the rollers (18) in conjunction with a helical guide means (16) in each case.

2. Helical conveyor according to Claim 1, characterised in that in the cross-member (19)/guide bar (20,21) contact region, elements (22) made of plastics material are attached to the cross-members (19).

3. Helical conveyor according to Claims 1 and 2, characterised in that belts are tensioned between the individual cross-members (19).

4. Helical conveyor with a horizontal conveyor, which is rotatable with respect to the vertical conveyor by way of a retaining member that can be rotated in a screw thread-like manner into the lower region of the vertical conveyor (3), according to Claims 1-3, characterised in that the retaining member is movable relative to the vertical conveyor (3) by means of a vertically arranged cylinder converting lifting movement into rotary movement, the transfer of the objects (23) from the rotating part (10) into the stationary part (6) of the vertical conveyor (3) being effected by way of a horizontally arranged tongue (25).

5. Helical conveyor according to Claim 4, characterised in that the tongue (25) is mounted in an articulated manner on the rotating part (10) and at the free end (27) slides on elements made of plastics material on the stationary part (6) of the vertical conveyor (3).

6. Helical conveyor according to Claims 4 and 5, characterised in that tapered rollers (26) that can be driven are provided on the tongue (25).

7. Helical conveyor according to Claims 4-6, characterised in that in order to compensate for differences in height in the course of the relative movement of the rotating part (10) with respect to the stationary part (6) of the vertical conveyor (3), the boom (2) can be caused to follow automatically, a cylinder (9) which extends approximately horizontally and is connected to the boom (2) being provided in the upper region of the vertical conveyor (3) to compensate for inclinations during the upward movement of the boom (2).

## Revendications

1. Transporteur hélicoïdal pour charger des marchandises diverses, notamment des marchandises conditionnées, dans des espaces de chargement et pour décharger de telles marchandises d'espaces de chargement, en particulier pour charger et décharger des navires, comprenant un élévateur (3) disposé essentiellement verticalement, qui est relié dans sa zone terminale supérieure à une flèche (2), l'élévateur (3) étant équipé de plusieurs éléments de transport superposés en forme d'hélice, qui peuvent être entraînés au moyen d'une ou de plusieurs chaînes sans fin (17) animée(s) d'un mouvement de circulation, avec prévision, à intervalles prédéterminés, de galets (18) horizontaux et verticaux coopérant avec la chaîne (17) et qui roulent dans des guides (16) agencés également en hélice, conformément au pas d'hélice des éléments de transport, et dans lequel des traverses (19) sont fixées à intervalles prédéterminés sur les galets (18), transversalement à la chaîne (17), caractérisé en ce que les traverses (19) sont soutenues par des fers plats ou des éléments analogues de guidage (20, 21) disposés sur chant, verticalement, afin d'empêcher le basculement des traverses, lesquelles sont en outre empêchées de tourner horizontalement sur les pièces constitutives de la chaîne (17), formées de maillons ronds, que l'entraînement de la chaîne (17) est disposé à l'extrémité supérieure de l'élévateur (3) et que le guidage de la chaîne (17), à la fois de son brin supérieur et de son brin inférieur, est assuré par les galets (18) en combinaison avec chaque fois un guide (16) en forme d'hélice.

2. Transporteur hélicoïdal selon la revendication 1, caractérisé en ce que des éléments de matière plastique (22) sont fixés aux traverses (19) dans la zone de contact des traverses avec les fers plats ou éléments analogues de guidage (20, 21).

3. Transporteur hélicoïdal selon les revendications 1 et 2, caractérisé en ce que des sangles en forme de bandes sont tendues entre les différentes traverses (19).

4. Transporteur hélicoïdal selon les revendications 1-3 comprenant un transporteur horizontal susceptible d'être tourné par rapport à l'élévateur (3) au moyen d'un support pouvant être vissé à la façon d'un élément fileté dans la zone inférieure de l'élévateur, caractérisé en ce que le support est déplaçable par rapport à l'élévateur (3) au moyen d'un verin orienté verticalement et transformant un mouvement de translation en un mouvement de rotation, le transfert des objets (23) depuis la partie rotative (10) à la partie fixe (6) de l'élévateur (3) s'effectuant au moyen d'un bec (25) disposé horizontalement.

5. Transporteur hélicoïdal selon la revendication (4), caractérisé en ce que le bec (25) est monté de façon articulée sur la partie rotative (10) et glisse par son extrémité libre (27) sur des éléments de matière plastique portés par la partie fixe (6) de l'élévateur (3).

6. Transporteur hélicoïdal selon les revendications 4 et 5, caractérisé en ce que des rouleaux coniques (26), susceptibles d'être entraînés, sont prévus sur le bec (25).

7. Transporteur hélicoïdal selon les revendications 4-6, caractérisé en ce que la flèche (2) est asservie automatiquement pour compenser les différences de hauteur lors du mouvement relatif de la partie rotative (10) par rapport à la partie fixe (6) de l'élévateur (3), et un vérin (9), relié à la flèche (2) et orienté à peu près horizontalement est prévu dans la zone supérieure de l'élévateur (3) afin de compenser des inclinaisons lors du mouvement de montée de la flèche (2).

Fig.1

Fig.2

24

Fig.3

Fig.4